# EUROPEAN PATENT APPLICATION

(11) **EP 4 670 585 A1**
(43) Date of publication of application: **31.12.2025**
(21) Application number: 23924145.8
(22) Date of filing: 26.09.2023
(51) Int. Cl.: A47J 37/06, A47J 37/07

(54) **CERAMIC COOKING DEVICE**

(30) Priority: 24.02.2023 JP 2023026882
(71) Applicant: Rinnai Corporation, Nagoya-shi, Aichi 454-0802 (JP)
(72) Inventor: HAYASHI Shusaku, Nagoya-shi, Aichi 454-0802 (JP); YAMADA Isao, Nagoya-shi, Aichi 454-0802 (JP)
(74) Representative: Haseltine Lake Kempner LLP
(86) International application number: PCT/JP2023/034866
(87) International publication number: WO 2024/176501

(57) **Abstract**

In a grill-cooking apparatus including a burner that combusts hydrogen and a food mounting part provided above the burner, a washing-away effect of the excessive fat content by moisture contained in a hydrogen combustion gas can be enhanced. Each supporting rod part includes a flat part located at an upper end and configured to come into contact with food, a maximum-width part, which is located below and away from the flat part, and a Y-axis direction width of which is maximum, and an increasing-width part, a Y-axis direction width of which gradually increases from the flat part toward the maximum-width part. Preferably, each supporting rod part is provided with a decreasing-width part, a width of which gradually decreases from the maximum-width part toward a lower end.

## Description

### TECHNICAL FIELD

The invention relates to a grill-cooking apparatus including a burner that combusts hydrogen and a food mounting part provided above the burner.

### BACKGOUND ART

Conventionally, as this type of the grill-cooking apparatus, there is known the one described in Patent Document 1, for example. In this grill-cooking apparatus, the food mounting part is formed by a grill net. However, a sense of luxury is not obtained by the grill net. As a result, it is considered that, provided that two horizontally orthogonal directions are defined as an X-axis direction and a Y-axis direction, respectively, the food mounting part is formed by a grid-shaped plate body in which a plurality of elongated holes extending in the X-axis direction are arranged in the Y-axis direction, and supporting rod parts that support food are provided between each pair of adjacent elongated holes, thereby providing the sense of luxury.

### PRIOR ART

### PATENT DOCUMENT

Patent Document 1: JP2012-42068 A

### SUMMARY OF INVENTION

### PROBLEM THAT THE INVENTION IS TO BE SOLVED

Meanwhile, hydrogen combustion gas that is generated by combusting hydrogen contains a larger amount of water vapor per unit heat amount than combustion gas that is generated by combusting a hydrocarbon. Therefore, if the hydrogen combustion gas is made to come into direct contact with food, it is possible that excessive fat content will be washed away by moisture contained in the hydrogen combustion gas.

Here, in the case where the food mounting part is formed by the grid-shaped plate body as above-mentioned, a cross-section of each supporting rod part, which is orthogonal to the X-axis direction, is made to have an approximately rectangular shape. In this case, the hydrogen combustion gas flows at an approximately uniform speed in each space between the supporting rod parts adjacent to each other in the Y-axis direction, that is, inside each elongated hole, from a lower side to an upper side. Therefore, it is difficult to prolong the time during which the hydrogen combustion gas remains near the food, and a washing-away effect of the excessive fat content cannot be sufficiently obtained.

The invention has been made in view of the above-mentioned points and has a problem of providing a grill-cooking apparatus that allows for enhancement in the washing-away effect of the excessive fat content.

### MEANS FOR SOLVING THE PROBLEM

In order to solve the above-mentioned problem, the invention provides a grill-cooking apparatus, comprising: a burner 3 that combusts hydrogen; and a food mounting part provided above the burner, wherein, provided that two horizontally orthogonal directions are defined as an X-axis direction and a Y-axis direction, respectively, the food mounting part is formed by a grid-shaped plate body 5 in which a plurality of elongated holes 52 extending in the X-axis direction are arranged in the Y-axis direction, and supporting rod parts 53 that support food are provided between each pair of adjacent elongated holes, characterized in that: each supporting rod part comprises: a flat part 531 located at an upper end and configured to come into contact with food; a maximum-width part 532, which is located below and away from the flat part, and a Y-axis direction width Wb of which is maximum; and an increasing-width part 533, a Y-axis direction width of which gradually increases from the flat part toward the maximum-width part.

According to the invention, a Y-axis direction width of each elongated hole of the grid-shaped plate body is the narrowest at a vertical position corresponding to the maximum-width part of each supporting rod part, and gradually increases upward from that position. Therefore, the flow speed of the hydrogen combustion gas inside each elongated hole decreases upward from the vertical position corresponding to the maximum-width part, whereby the time during which the hydrogen combustion gas remains near food can be prolonged. Accordingly, it is possible to enhance a washing-away effect of excessive fat content by moisture contained in the hydrogen combustion gas.

In addition, in the invention, it is desirable that each supporting rod part further comprises a decreasing-width part 534, a Y-axis direction of which gradually decreases from the maximum-width part toward a lower end of each supporting rod part. According to this, the fat content easily flows downward along side surfaces on each side in the Y-axis direction of the decreasing-width part from lower ends of the side surfaces of the maximum-width part on each side in the Y-axis direction. Therefore, the fat content remains at the lower ends of the side surfaces of the maximum-width part on each side in the Y-axis direction, and obstruction of the flow of the hydrogen combustion gas by the remaining fat content can be prevented.

Furthermore, in the invention, it is desirable that a Y-axis direction width Wa between the maximum-width parts of the adjacent supporting rod parts in the Y-axis direction is greater than the Y-axis direction width Wb of the maximum-width part of each supporting rod part. According to this, the amount of the hydrogen combustion gas reaching the food through each elongated hole can be increased, and the washing-away effect of excessive fat content can be further enhanced.

In addition, in the invention, it is desirable that a side surface of the increasing-width part of each supporting rod part on each side in the Y-axis direction is formed as a concave surface 533a that curves toward a central side in the Y-axis direction of each supporting rod part, relative to a virtual inclined plane connecting the flat part and the maximum-width part. According to this, the flow speed of the hydrogen combustion gas flowing inside each elongated hole becomes significantly slower at a position corresponding to the increasing-width part. Therefore, the residence time of the hydrogen combustion gas near the food can be prolonged, thereby further enhancing the washing-away effect of excessive fat content.

Furthermore, in the invention, it is desirable that a plurality of grooves 531a are formed in the flat part of each supporting rod part at intervals in the X-axis direction. According to this, since the hydrogen combustion gas passes through each groove, a larger amount of the hydrogen combustion gas can come into contact with the food, which is advantageous for enhancing the washing-away effect of excessive fat content.

### BRIEF DESCRIRTION OF THE DRAWINGS

FIG. 1 is a perspective view of a grill-cooking apparatus of an embodiment of the invention.
FIG. 2 is a cross-section cut along a II-II line of FIG. 1.
FIG. 3 is a cross-section cut along a III-III line of FIG. 2.
FIG. 4 is an enlarged cross-section showing a main part of a modified example of a grid-shaped plate provided in the grill-cooking apparatus of the embodiment.
FIG. 5 is a perspective view showing another modified example of the grid-shaped plate body provided in the grill-cooking apparatus of the embodiment.

### MODES FOR CARRYING OUT THE INVENTION

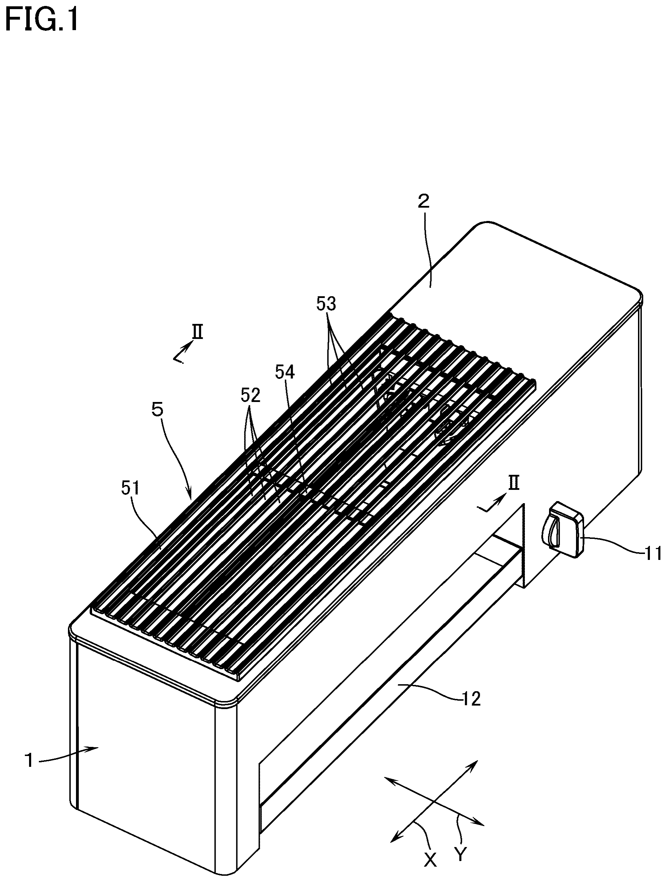

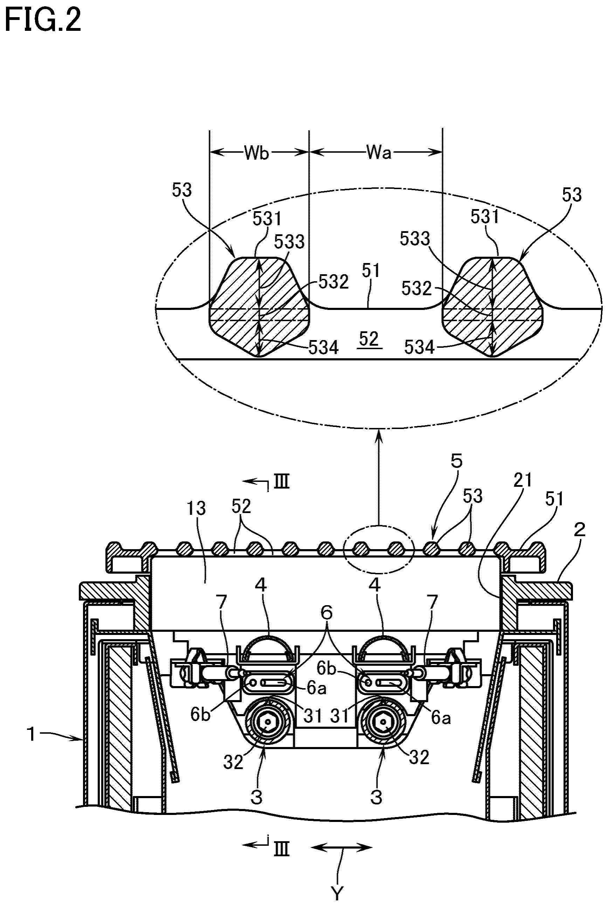

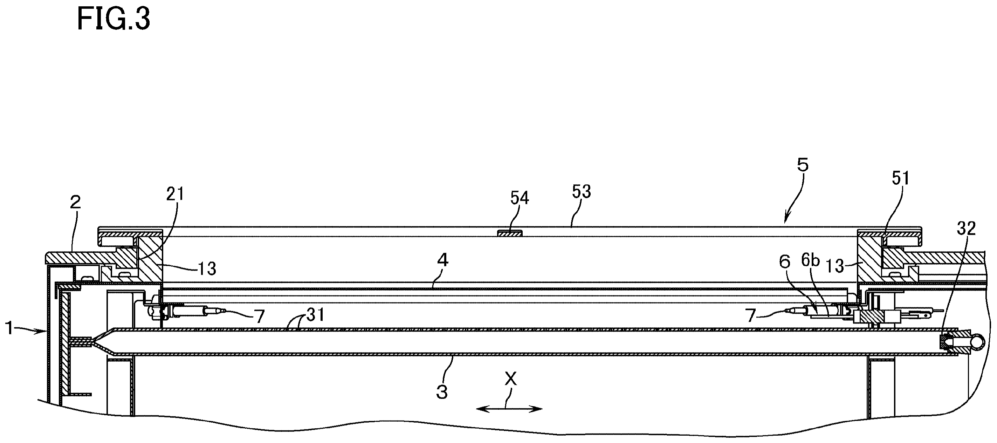

With reference to FIGS. 1 to 3, in a grill-cooking apparatus of an embodiment of the invention, provided that two horizontally orthogonal directions are defined as an X-axis direction and a Y-axis direction, respectively, a case 1 is provided, having a shape of an approximately rectangular parallelepiped that extends in the X-axis direction. A top plate 2 is provided on an upper surface of the case 1, and an opening 21, which has a rectangular shape when viewed in plan, is formed in the top plate 2. Inside the case 1, facing the opening 21, two pipe-shaped burner 3 that extend in the X-axis direction are arranged in parallel and at intervals in the Y-axis direction. In each burner 3, a plurality of flame holes 31 opening upward are formed at intervals in the X-direction. In addition, a nozzle 32 is fitted to one end part of each burner 3 in the X-axis direction, and hydrogen is supplied to each burner 3 via the nozzle 32, thereby allowing hydrogen ejected from each flame hole 31 to diffuse and combust. Furthermore, an infrared radiating member 4 is provided above each burner 3, the infrared radiating member 4 being curved in an upwardly convex arc shape, so that a below-mentioned grid-shaped plate body 5 and food are heated by infrared rays emitted when the infrared radiating member 4 is heated to red-hot. In addition, hydrogen combustion gas, generated by combusting hydrogen, overflows from below the infrared radiating member 4, rises, and contributes to the heating of the plate body 5 and the food.

Meanwhile, an ignition plug 6, having an ignition electrode 6a that applies high voltage and an earth electrode 6b, is disposed above one end part of each burner 3 in the X-axis direction. In addition, a pair of flame rods 7, 7 are disposed facing upper sides of both end parts of each burner 3 in the X-axis direction. Furthermore, a valve unit including a gas cock for hydrogen, which is operated by a knob 11 provided on an outer surface of the case 1, an ignitor, and a controller (not shown) are housed inside the case 1, spaced apart from the opening 21 on one side in the X-axis direction. A receiving tray 12, which is insertable and releasable in the Y-axis direction, is housed in a portion inside the case 1 located below the opening 21.

A grid-shaped plate body 5, serving as a food mounting part and formed by die-casting, is provided on the top plate 2 so as to cover the opening 21. The plate body 5 has: an outer peripheral frame part 51; a plurality of elongated holes 52; a plurality of supporting rod parts 53; and a beam part 54. The outer peripheral frame part 51 has a rectangular shape when viewed in plan. Each elongated hole 52 is formed within a region surrounded by the outer peripheral frame part 51 at intervals in the Y-axis direction, and extends in the X-axis direction. Each supporting rod part 53 is provided between the adjacent elongated holes 52, 52. The beam part 54 intersects a lower portion of each supporting rod part 53 at a central part in the X-axis direction and extends in the Y-axis direction. Accordingly, each elongated hole 52 is divided into two portions by the beam part 54. An upper half portion of each supporting rod part 53 extends on upper surfaces of portions of the outer peripheral frame part 51 located on both sides in the X-axis direction. In addition, a pair of supporting members 13, 13 for supporting the plate body is provided on the upper surface of the case 1, the supporting members 13, 13 being located at both end parts of the opening 21 in the X-axis direction. Thus, the plate body 5 is supported by both supporting members 13, 13.

Meanwhile, to enhance a washing-away effect of excessive fat content by moisture contained in the hydrogen combustion gas, it is necessary to prolong the time during which the hydrogen combustion gas remains near the food. Then, in the embodiment, each supporting rod part 53 of the grid-shaped plate body 5 has: a flat part 531, which is located at an upper end and with which the food comes into contact; a maximum-width part 532, a Y-axis direction width Wb of which is maximum at a position located below and away from the flat part 531; and an increasing-width part 533, a Y-axis direction width of which gradually increases from the flat part 531 toward the maximum-width part 532.

According to this, a Y-axis direction width of each elongated hole 52 of the grid-shaped plate body 5 is the narrowest at a vertical position corresponding to the maximum-width part 532 of each supporting rod part 53, and gradually increases upward from that position. Therefore, the flow speed of the hydrogen combustion gas inside each elongated hole 52 decreases upward from the vertical position corresponding to the maximum-width part 532, whereby the time during which the hydrogen combustion gas remains near the food can be prolonged. Accordingly, it is possible to enhance a washing-away effect of excessive fat content by the moisture contained in the hydrogen combustion gas.

In addition, in the embodiment, each supporting rod part 53 further has a decreasing-width part 534, a Y-axis direction width of which gradually decreases from the maximum-width part 532 toward a lower end of each supporting rod part 53. According to this, the fat content that has dropped on each supporting rod part 53 easily flows downward along side surfaces on each side in the Y-axis direction of the decreasing-width part 534 from lower ends of the side surfaces of the maximum-width part 532 on each side in the Y-axis direction. Therefore, the fat content remains at the lower ends of the side surfaces of the maximum-width part 532 on each side in the Y-axis direction, and obstruction of the flow of the hydrogen combustion gas by the remaining fat content can be prevented.

Furthermore, in the embodiment, a Y-axis-direction width Wa between the maximum-width parts 532, 532 of adjacent supporting rod parts 53, 53 in the Y-axis direction is greater than the Y-axis-direction width Wb of the maximum-width part 532 of each supporting rod part 53. For example, the widths Wa and Wb are set to 8 mm and 6 mm, respectively. According to this, the amount of the hydrogen combustion gas reaching the food through each elongated hole 52 can be increased, and the washing-away effect of excessive fat content can be further enhanced.

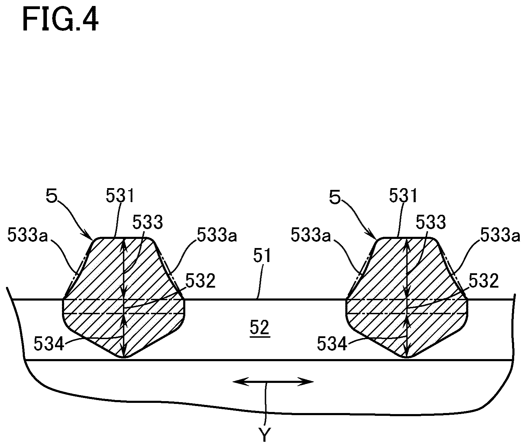

It should be noted that, in the embodiment, a side surface of the increasing-width part 533 of each supporting rod part 53 on each side in the Y-axis direction is formed as an inclined plane that connects the flat part 531 and the maximum-width part 532. However, as shown in FIG. 4, the side surface of the increasing-width part 533 may be formed as a concave surface 533a that curves toward a central side in the Y-axis direction of the supporting rod part 53, relative to a virtual inclined plane (shown by a dashed line) connecting the flat part 531 and the maximum-width part 532. According to this, a Y-axis direction width of a portion of each elongated hole 52 that corresponds to the increasing-width part 533 becomes greater than that in the above-mentioned embodiment, and the flow speed of the hydrogen combustion gas becomes significantly slower at the portion. Therefore, the residence time of the hydrogen combustion gas near the food can be prolonged, thereby further enhancing the washing-away effect of excessive fat content.

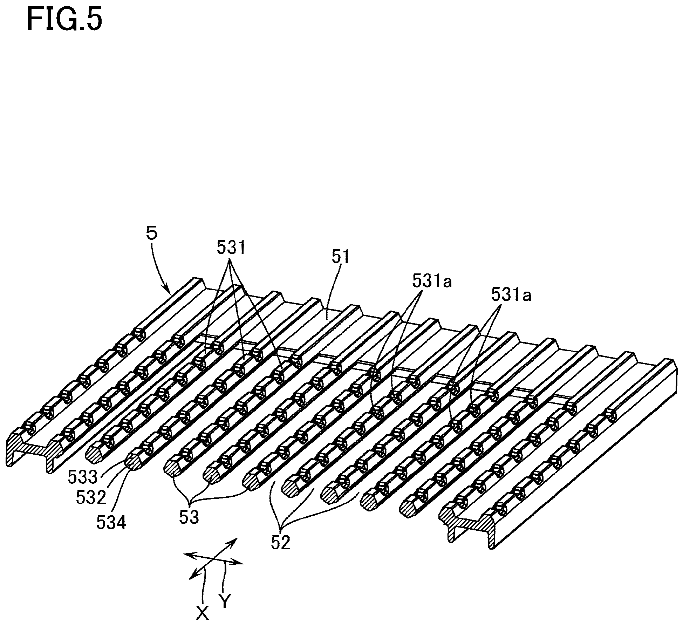

In addition, as shown in FIG. 5, a plurality of grooves 531a may be formed in the flat part 531 of each supporting rod part 53 at intervals in the X-axis direction. According to this, since the hydrogen combustion gas passes through each groove 531a, a larger amount of the hydrogen combustion gas can come into contact with the food, which is advantageous for enhancing the washing-away effect of excessive fat content.

In the foregoing, descriptions have so far been made of the embodiments of the invention with reference to the drawings, but the invention is not limited to the embodiments. For example, in the above-mentioned embodiments, the X-axis direction serving as a longitudinal direction of each elongated hole 52 is defined as a longitudinal direction of the rectangular opening 21. However, it is also possible that a short direction of the opening 21 is defined as the X-axis direction, that is, each elongated hole extending in the short direction of the opening 21 is formed in the plate body 5. In addition, although, in the above-mentioned embodiments, each infrared radiating member 4 is provided, it is possible to omit each infrared radiating member 4.

### EXPLANATION OF MARKS

- 3: Burner
- 5: Grid-shaped plate body
- 52: Elongated hole
- 53: Supporting rod part
- 531: Flat part
- 531a: Groove
- 532: Maximum-width part
- 533: Increasing-width part
- 533a: Concave surface
- 534: Decreasing-width part
- Wa: Y-axis direction width between maximum-width parts of adjacent supporting rod parts in Y-axis direction
- Wb: Y-axis direction width of maximum-width part of each supporting rod part

## Claims

1. A grill-cooking apparatus, comprising:
a burner (3) that combusts hydrogen; and
a food mounting part provided above the burner,
wherein, provided that two horizontally orthogonal directions are defined as an X-axis direction and a Y-axis direction, respectively, the food mounting part is formed by a grid-shaped plate body (5) in which a plurality of elongated holes (52) extending in the X-axis direction are arranged in the Y-axis direction, and supporting rod parts (53) that support food are provided between each pair of adjacent elongated holes,
**characterized in that**:
each supporting rod part comprises:
a flat part (531) located at an upper end and configured to come into contact with food;
a maximum-width part (532), which is located below and away from the flat part, and a Y-axis direction width (Wb) of which is maximum; and
an increasing-width part (533), a Y-axis direction width of which gradually increases from the flat part toward the maximum-width part.

2. The grill-cooking apparatus as claimed in claim 1, wherein each supporting rod part further comprises a decreasing-width part (534), a Y-axis direction width of which gradually decreases from the maximum-width part toward a lower end of each supporting rod part.

3. The grill-cooking apparatus as claimed in claim 1, wherein a Y-axis direction width (Wa) between the maximum-width parts of the adjacent supporting rod parts in the Y-axis direction is greater than the Y-axis direction width of the maximum-width part of each supporting rod part.

4. The grill-cooking apparatus as claimed in claim 1, wherein a side surface of the increasing-width part of each supporting rod part on each side in the Y-axis direction is formed as a concave surface (533a) that curves toward a central side in the Y-axis direction of each supporting rod part, relative to a virtual inclined plane connecting the flat part and the maximum-width part.

5. The grill-cooking apparatus as claimed in claims 1, wherein a plurality of grooves (531a) are formed in the flat part of each supporting rod part at intervals in the X-axis direction.
